(19) Europäisches Patentamt
European Patent Office
Office européen des brevets

(11) **EP 2 737 510 B1**

(12) **EUROPÄISCHE PATENTSCHRIFT**

(45) Veröffentlichungstag und Bekanntmachung des Hinweises auf die Patenterteilung:
**03.01.2018   Patentblatt 2018/01**

(21) Anmeldenummer: **12753720.7**

(22) Anmeldetag: **30.08.2012**

(51) Int Cl.:
*H01H 33/59* (2006.01)       *H02H 3/087* (2006.01)
*H01H 33/16* (2006.01)       *H01H 9/54* (2006.01)

(86) Internationale Anmeldenummer:
**PCT/EP2012/066885**

(87) Internationale Veröffentlichungsnummer:
**WO 2013/045201 (04.04.2013 Gazette 2013/14)**

(54) **GLEICHSPANNUNGS-LEISTUNGSSCHALTER**

DC VOLTAGE CIRCUIT BREAKER

DISJONCTEUR DE COURANT CONTINU

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **27.09.2011   DE 102011083514**

(43) Veröffentlichungstag der Anmeldung:
**04.06.2014   Patentblatt 2014/23**

(73) Patentinhaber: **Siemens Aktiengesellschaft
80333 München (DE)**

(72) Erfinder:
• **HARTMANN, Werner
91085 Weisendorf (DE)**
• **KOSSE, Sylvio
91052 Erlangen (DE)**
• **SCHETTLER, Frank
91058 Erlangen (DE)**

(56) Entgegenhaltungen:
**EP-A2- 1 102 295       DE-B- 1 167 939
JP-A- 8 148 066       JP-A- 2005 222 705**

**Beschreibung**

Die vorliegende Erfindung betrifft einen Gleichspannungs-Leistungsschalter.

Elektrische Energie wird in Kraftwerken in der Regel als Dreiphasenwechselstrom erzeugt. Zur Übertragung wird diese Energie durch Leistungstransformatoren auf sehr hohe elektrische Wechselspannungen transformiert und über Freileitungen übertragen. Bei sehr langen Freileitungen ist eine Übertragung der Energie mit Gleichstrom allerdings mit geringeren Verlusten verbunden und damit günstiger.

Bei der Gleichstromübertragung bestehen im Stand der Technik allerdings Schwierigkeiten, Leistungsflüsse in vermaschten Leitungsnetzen zu steuern. Daher werden zur Gleichstromübertragung bisher fast ausschließlich Punkt-zu-Punkt-Verbindungen ohne Abzweigungen oder Maschen verwendet. Für die Zukunft ist allerdings ein Auf- und Ausbau von Gleichstrom-Leitungsnetzen geplant. Hierzu sind Gleichspannungs-Leistungsschalter erforderlich, um die Verfügbarkeit der geplanten Gleichstrom-Leitungsnetze zu erhöhen. Gleichspannungs-Leistungsschalter dienen dazu, im Fehlerfall Teile eines Leitungsnetzes selektiv abzuschalten und dadurch einen Ausfall des gesamten Leitungsnetzes zu verhindern.

Hierfür ist es bekannt, für das Abschalten eines Gleichstroms im Gleichspannungs-Leistungsschalter einen Gegenstrom zu erzeugen, der zu einem Strom-Nulldurchgang führt. Dazu wird ein Kondensator entladen. Nachteilig ist, dass der Stromimpuls, der durch den Abschaltvorgang auf die an den Schalter angeschlossenen Leitungen aufgeprägt wird, an vom Schalter entfernt liegenden Stellen des Netzes als Fehler interpretiert werden kann und damit weitere, nicht gewollte Schaltvorgänge auslösen kann. Zudem muss der für den Stromnulldurchgang verwendete Kondensator für den ungünstigsten Betriebsfall eines Kurzschlusses ausgelegt sein; für das Abschalten von erheblich niedrigeren Betriebsströmen und Überlastströmen hingegen ist der Kondensator hingegen stark überdimensioniert, was neben Fehlinterpretationen im Netz sogar zu Schaltversagern führen kann.

Aus der JP 2005 222705 A und der JP 8 148066 A sind Gleichspannungs-Leistungsschalter mit Kommutatorschaltungen bekannt.

Die Aufgabe der vorliegenden Erfindung ist es, einen verbesserten Gleichspannungs-Leistungsschalter bereitzustellen. Eine weitere Aufgabe besteht darin, ein Verfahren zum Betreiben eines solchen Gleichspannungs-Leistungsschalters anzugeben. Diese Aufgaben werden hinsichtlich des Schalters durch einen Gleichspannungs-Leistungsschalter mit den Merkmalen von Anspruch 1 gelöst. Hinsichtlich des Verfahrens besteht eine Lösung in dem Verfahren mit den Merkmalen von Anspruch 9.

Der erfindungsgemäße Gleichspannungs-Leistungsschalter weist wenigstens einen Unterbrecher und eine parallel zum Unterbrecher angeordneten Kommutatoreinrichtung auf. Die Kommutatoreinrichtung umfasst eine Kondensatorschaltung, die ihrerseits eine Parallelschaltung von wenigstens zwei Kondensatorzweigen umfasst. Die Kondensatorzweige weisen jeweils einen Kondensator in Serie zu einer Induktivität und einem Kondensatorzweig-Schalter auf.

Bei dem erfindungsgemäßen Gleichspannungs-Leistungsschalter ist es vorteilhaft möglich, die Höhe des erzeugten Gegenstroms zu variieren. Durch Einschalten verschiedener Kombinationen von Kondensatorzweig-Schaltern können verschieden starke Gegenströme erzeugt werden. Damit kann die Erzwingung des Strom-Nulldurchgangs im Unterbrecher an die vorliegende Situation angepasst werden und die Gefahr, an anderer Stelle im Netz den Anschein eines Fehlers zu erzeugen, wird verringert. Damit können auch Lastströme und Überlastströme im Netz mit minimaler Beeinflussung bzw. Belastung des Netzes abgeschaltet werden. Zweckmäßig umfasst die Kommutatoreinrichtung eine Reihenschaltung eines Kommutatorwiderstands, einer Kommutatorspule und der Kondensatorschaltung. Ebenfalls zweckmäßig ist es, wenn zum Abbau der Energie des Schaltvorgangs ein Energieabsorber in Parallelschaltung zur Kommutatoreinrichtung vorgesehen ist. Erfindungsgemäß weisen die Kondensatoren der Kondensatorzweige voneinander verschiedene Kapazitäten auf. Hierdurch ist eine weiträumigere Anpassung des Gegenstroms an die Notwendigkeiten der Abschaltung möglich. Erfindungsgemäß sind ein oder mehrere Kondensatoren so ausgelegt, dass der erzeugbare Gegenstrom durch Einschaltung des oder der jeweiligen Kondensatorzweig-Schalter zur Schaltung von Nennströmen ausreicht. Erfindungsgemäß sind ein oder mehrere Kondensatoren so ausgelegt, dass der erzeugbare Gegenstrom durch Einschaltung des oder der jeweiligen Kondensatorzweig-Schalter zur Schaltung von Kurzschlussströmen ausreicht. Erfindungsgemäß sind ein oder mehrere Kondensatoren so ausgelegt, dass der erzeugbare Gegenstrom durch Einschaltung des oder der jeweiligen Kondensatorzweig-Schalter zum Trennen der Leitung bei sehr kleinen Strömen ausgelegt ist.

In einer vorteilhaften Ausgestaltung der Erfindung umfasst der Gleichspannungs-Leistungsschalter sechs Kondensatorzweige, von denen je zwei Kondensatorzweige zur Schaltung von Nennströmen, Schaltung von Kurzschlussströmen und zum Trennen der Leitung bei sehr kleinen Strömen ausgelegt sind.

Dabei betragen die Kapazitäten der Kondensatoren bevorzugt im Bereich von 1 µF bis 50 µF.

Das erfindungsgemäße Verfahren zum Betreiben eines der beschriebenen Gleichspannungs-Leistungsschalter umfasst folgende Schritte:

- Ermitteln einer Öffnungsbedingung für den Gleichspannungs-Leistungsschalter, wobei die Öffnungsbedingung wenigstens eine der folgenden Öffnungsbedingung umfasst:

-- Anforderung zum Trennen von kapazitiven Lasten und Leitungen oder Kabeln;
-- Anforderung zum Öffnen unter Stromfluss;
-- Anstieg des Stroms als Indikator eines Kurzschlusses;
-- Überschreiten einer kritischen Stromanstiegsrate im Netz als Indikator eines Kurzschlusses;

- Ermitteln wenigstens eines für die Öffnungsbedingung geeigneten Kondensatorzweigs;
- Öffnen der mindestens einen Unterbrechereinheit vor Auslösung des Kondensatorzweig-Schalters;
- Schließen des oder der Kondensatorzweig-Schalter der ermittelten Kondensatorzweige.

Zweckmäßig erfolgt beim entstehenden Strom-Nulldurchgang dann ein Öffnen des ersten Unterbrechers. Die oben beschriebenen Eigenschaften, Merkmale und Vorteile dieser Erfindung, sowie die Art und Weise, wie diese erreicht werden, werden klarer und deutlicher verständlich im Zusammenhang mit der folgenden Beschreibung der Ausführungsbeispiele, die im Zusammenhang mit der einzigen Figur der Zeichnung näher erläutert werden:

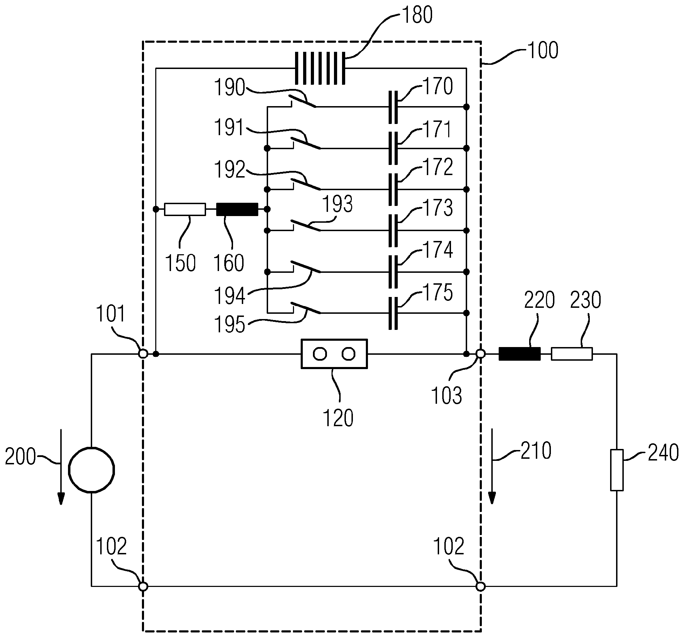

Figur 1 zeigt eine Schaltungsanordnung eines Gleichspannungs-Leistungsschalters 100. Der Gleichspannungs-Leistungsschalter kann in einem Gleichstrom-Leitungsnetz integriert werden, um im Falle eines Kurzschlusses einen Teil des Gleichstrom-Leitungsnetzes selektiv abzuschalten. Der Gleichspannungs-Leistungsschalter 100 kann beispielsweise zur Verwendung in einem Hochspannungs-Gleichstrom-Leitungsnetz vorgesehen sein. Der Gleichspannungs-Leistungsschalter 100 ermöglicht in einem Gleichstrom-Leitungsnetz einen Schutz der positiven Phase gegen das Erdpotential, der negativen Phase gegen das Erdpotential und der positiven Phase gegen die negative Phase.

Der Gleichspannungs-Leistungsschalter 100 weist einen ersten bis dritten Knoten 101...103 auf. Die Knoten 101...103 sind Schaltungsknoten des Gleichspannungs-Leistungsschalters 100, die sich jeweils auf einem elektrischen Potential befinden. Die Knoten 101...103 können demnach jeweils auch elektrische Leiterabschnitte umfassen, sofern die elektrischen Widerstände dieser Leiterabschnitte vernachlässigbar sind.
Zwischen dem ersten Knoten 101 und dem zweiten Knoten 102 des Gleichspannungs-Leistungsschalters 100 kann eine Gleichspannung 200 angelegt werden. Die Gleichspannung 200 kann eine Quellenspannung sein, die durch einen Hochspannungsgleichrichter an ein Gleichstrom-Leitungsnetz angelegt wird. Der erste Knoten 101 und der zweite Knoten 102 bilden in diesem Fall eine Eingangsseite des Gleichspannungs-Leistungsschalters 100 und des an den Gleichspannungs-Leistungsschalter 100 anschließenden Gleichstrom-Leitungsnetzes. Die zwischen dem ersten Knoten 101 und dem zweiten Knoten 102 angelegte Gleichspannung 200 kann beispielsweise 500 kV betragen. Die Gleichspannung 200 kann jedoch auch höhere Spannungswerte von mehr als 1200 kV oder niedrigere Werte von nur 50 kV annehmen. Die Gleichspannung 200 kann in dem Gleichstrom-Leitungsnetz, in dem der Gleichspannungs-Leistungsschalter 100 verwendet wird, einen Gleichstrom von 20 kA oder mehr anregen.
Zwischen dem dritten Knoten 103 und dem zweiten Knoten 102 des Gleichspannungs-Leistungsschalters 100 kann eine Ausgangsspannung 210 abgegriffen werden. Die Ausgangsspannung 210 ist eine Gleichspannung und entspricht im Wesentlichen der zwischen dem ersten Knoten 101 und dem zweiten Knoten 102 angelegten Gleichspannung 200. Im Falle eines Kurzschlusses kann der Gleichspannungs-Leistungsschalter 100 die Verbindung zwischen dem ersten Knoten 101 und dem dritten Knoten 103 jedoch auftrennen, so dass die Ausgangsspannung 210 nicht mehr der Gleichspannung 200 entspricht.
An dem dritten Knoten 103 und dem zweiten Knoten 102 können sich Leitungsteile des Gleichstrom-Leitungsnetzes anschließen, in dem der Gleichspannungs-Leistungsschalter 100 verwendet wird. Diese Teile des Gleichstrom-Leitungsnetzes sind in Figur 1 schematisch durch eine Leitungsimpedanz 220, einen Leitungswiderstand 230 und einen Lastwiderstand 240 dargestellt.
Zwischen dem ersten Knoten 101 und dem dritten Knoten 103 ist ein Unterbrecher 120 angeordnet. Der Unterbrecher 120 dient dazu, im Falle eines Kurzschlusses eine elektrische Verbindung zwischen dem ersten Knoten 101 und dem vierten Knoten 103 aufzutrennen.
Der Unterbrecher 120 kann die elektrische Verbindung zwischen dem ersten Knoten 101 und dem dritten Knoten 103 nur auftrennen, wenn ein zwischen dem ersten Knoten 101 und dem dritten Knoten 103 fließender elektrischer Strom klein ist, sich also dem Wert Null annähert und der prospektive Strom durch den Unterbrecher vorteilhaft das Vorzeichen umkehrt, d.h. einen Nulldurchgang erfährt. Andernfalls kommt es während des Auftrennens der Verbindung zwischen dem ersten Knoten 101 und dem dritten Knoten 103 zur nichtlöschbaren Ausbildung von Lichtbögen, die den Unterbrecher 120 und den gesamten Gleichspannungs-Leistungsschalter 100 oder auch weitere Teile eines Gleichstrom-Leitungsnetzes beschädigen oder zerstören können. Somit muss im Falle eines Kurzschlusses der zwischen dem ersten Knoten 101 und dem dritten Knoten 103 fließende elektrische Strom binnen kürzester Zeit auf Null abgesenkt werden, damit der Unterbrecher 120 die elektrische Verbindung zwischen dem ersten Knoten 101 und dem dritten Knoten 103 unterbrechen kann. Hierzu weist der Gleichspannungs-Leistungsschalter 100 eine Kommutatorschaltung auf, die zwischen dem ersten Knoten 101 und dem dritten Knoten 103 parallel zum Unterbrecher 120 angeordnet ist.

Die Kommutatorschaltung des Gleichspannungs-Leistungsschalters 100 umfasst einen Kommutatorwiderstand 150, eine Kommutatorspule 160 und eine Kondensatorschaltung. Kommutatorwiderstand 150, die Kommutatorspule 160 und der Kondensatorschaltung bilden eine Reihenschaltung. Es ist auch möglich, die Reihenfolge von Kommutatorwiderstand 150, Kommutatorspule 160 und Kondensatorschaltung zu ändern.

Die Kommutatorschaltung dient dazu, einen elektrischen Gegenstrom durch den Unterbrecher 120 zu erzeugen, der dem gewöhnlichen Stromfluss entgegen gerichtet ist und diesen kompensiert. Auf diese Weise bewirkt die Kommutatorschaltung einen Nulldurchgang des Stromflusses durch den Unterbrecher 120, der es dem Unterbrecher 120 ermöglicht, die elektrische Verbindung zwischen dem ersten Knoten 101 und dem dritten Knoten 103 zu unterbrechen.

Der Gleichspannungs-Leistungsschalter 100 weist ferner einen Energieabsorber 180 auf, der zwischen dem ersten Knoten 101 und dem dritten Knoten 103 angeordnet ist. Der Energieabsorber 180 ist somit der Kommutatorschaltung parallel geschaltet. Der Energieabsorber 180 dient dazu, die im Fall eines Kurzschlusses und einer durch den Gleichspannungs-Leistungsschalter 100 bewirkten Unterbrechung freiwerdende magnetisch gespeicherte Energie zu absorbieren. Der Energieabsorber 180 kann beispielsweise einen Metalloxid-Spannungsbegrenzer wie z.B. ZnO-Varistorstapel umfassen.

Die Kondensatorschaltung umfasst eine Parallelschaltung von mindestens zwei, vorzugsweise drei bis sechs Kondensatorzweigen. Die Kondensatorzweige umfassen dabei jeweils eine Serienschaltung aus einem Kondensatorzweig-Schalter 190...195 und einem Kondensator 170...175. Die Kondensatoren sind dabei mit unterschiedlicher Kapazität ausgelegt und mithilfe einer nicht näher spezifizierten Spannungsquelle auf eine Spannung aufgeladen. Die Kapazität ergibt sich dabei aus dem Gegenstrom, der zu erzeugen ist:

$$L_{Com} = \frac{U_{C_{Com}}}{\frac{di(t)}{dt}}$$

und

$$C_{Com} = \frac{I_{Com}}{U_{C_{Com}}} L_{Com}$$

Die Gleichspannung 200 kann beispielsweise 500 kV betragen. Ein am ersten Knoten 101 des Gleichspannungs-Leistungsschalters 100 in den Gleichspannungs-Leistungsschalter 100 fließender Strom kann beispielsweise eine Stromstärke von 20 kA aufweisen.

Im gewöhnlichen Betrieb des Gleichspannungs-Leistungsschalters 100 sind die Kondensatorzweig-Schalter 190...195 des Gleichspannungs-Leistungsschalters 100 geöffnet. Stromfluss zwischen dem ersten Knoten 101 und dem dritten Knoten 103 ist über den Unterbrecher 120 möglich. Kommt es im Gleichstrom-Leitungsnetz, in dem der Gleichspannungs-Leistungsschalter 100 verwendet wird, zu einem Kurzschluss, so steigt der durch den Gleichspannungs-Leistungsschalter 100 fließende elektrische Strom stark an. Dies wird durch eine in Figur 1 nicht dargestellte Detektionsvorrichtung detektiert. Wird ein übermäßiger Anstieg des im Gleichspannungs-Leistungsschalter 100 fließenden elektrischen Stroms erkannt, so wird eine Abschaltung unternommen. Hierzu werden der erste und/oder zweite Kondensatorzweig-Schalter 190, 191 eingeschaltet. Hierdurch wird ein Gegenstrom erzeugt, der innerhalb von wenigen ms der Strom durch den Unterbrecher 120 zu Null werden lässt. Daraufhin kann der Unterbrecher 120 den Strom dauerhaft abschalten. Die hier abzuschaltenden Ströme, d.h, die Höhe des Gegenstroms beträgt hier 50 kA und mehr.

Eine weitere Situation, bei der der Gleichspannungs-Leistungsschalters 100 eine Abschaltung vornehmen kann, ist die gewollte Abschaltung bei Nennstrom. In diesem Fall werden bei dem Gleichspannungs-Leistungsschalters 100 der dritte und/oder vierte Kondensatorzweig-Schalter 192, 193 eingeschaltet. Die Zuschaltung eines oder beider Kondensatoren richtete sich dabei nach der Höhe des abzuschaltenden Stroms. Dieser kann beispielsweise zwischen 1 kA und 10 kA liegen. Somit kann der Gleichspannungs-Leistungsschalters 100 flexibel reagieren und bei aktuell niedrigem Stromfluss die Höhe des Gegenstroms geringer ausfallen lassen.

Eine dritte Situation ergibt sich, wenn kleine Ströme von weniger als 1 kA abgeschaltet werden sollen, also eine Trennung oder Schaltung von Leitungen oder kleinen kapazitiven Lasten vorgenommen werden soll. In diesem Fall werden der fünfte und/oder sechste Kondensatorzweig-Schalter 194, 195 eingeschaltet. Der erzeugte Gegenstrom ist hier vergleichsweise gering. Dadurch wird auch der außerhalb des Gleichspannungs-Leistungsschalters 100 wahrnehmbare Strompuls minimiert und die Chance verringert, dass andere Schalter diesen Strompuls fehlerhafterweise als Kurzschluss wahrnehmen.

Der Gleichspannungs-Leistungsschalter 100 ermöglicht eine physikalische Trennung in einem Gleichstrom-Leitungsnetz bei Energien von bis zu 20 MJ in einer Zeit in der Größenordnung von 10 ms. Dies entspricht dem bei Wechselspannungs-Leitungsnetzen Üblichen. Der Gleichspannungs-Leistungsschalter 100 erlaubt die Verwendung von Gleichstrom-Leitungsnetzen mit Maschen, also von Gleichstrom-Leitungsnetzen, die nicht lediglich eine Punkt-zu-Punkt-Verbindung umfassen. Der Gleichspannungs-Leistungsschalter 100 ist besonders vorteilhaft für die Verwendung in Multi-Terminal-Off-Shore-Hochspannungs-Einspeisepunkten, die erneuerbare Energiequellen nutzen. Der Gleichspannungs-Leistungsschalter 100 kann beispielsweise in Kombination mit Windkraftanlagen verwendet werden. Durch die Möglichkeit, den Gegenstrom an die vorliegende Situation anzupassen, wird durch den beschriebenen Schalter eine Einflussnahme auf andere Teile des Gleichspannungsnetzes minimiert.

**Patentansprüche**

1.  Gleichspannungs-Leistungsschalter (100) mit

    - wenigstens einem Unterbrecher (120) und
    - einer parallel zum Unterbrecher angeordneten Kommutatoreinrichtung,

    wobei

    - die Kommutatoreinrichtung eine Kondensatorschaltung umfasst,
    - die Kondensatorschaltung eine Parallelschaltung von drei bis sechs Kondensatorzweigen umfasst und
    - die Kondensatorzweige jeweils einen Kondensator (170...175) in Serie zu einer Induktivität und einem Kondensatorzweig-Schalter (190...195) aufweisen,

    wobei die Kondensatoren (170...175) der Kondensatorzweige voneinander verschiedene Kapazitäten aufweisen,
    wobei

    - ein oder mehrere Kondensatoren (170...175) so ausgelegt sind, dass der erzeugbare Gegenstrom durch zur Einschaltung des oder der jeweiligen Kondensatorzweig-Schalter (190...195) zur Schaltung von Nennströmen ausreicht,
    - ein oder mehrere Kondensatoren (170...175) so ausgelegt sind, dass der erzeugbare Gegenstrom durch zur Einschaltung des oder der jeweiligen Kondensatorzweig-Schalter (190...195) zur Schaltung von Kurzschlussströmen ausreicht, und
    - ein oder mehrere Kondensatoren (170...175) so ausgelegt sind, dass der erzeugbare Gegenstrom durch zur Einschaltung des oder der jeweiligen Kondensatorzweig-Schalter (190...195) zum Trennen der Leitung bei sehr kleinen Strömen ausgelegt ist.

2.  Gleichspannungs-Leistungsschalter (100) gemäß Anspruch 1 mit einem Energieabsorber (180) in Parallelschaltung zur Kommutatoreinrichtung.

3.  Gleichspannungs-Leistungsschalter (100) gemäß einem der vorangehenden Ansprüche, bei dem die Kommutatoreinrichtung eine Reihenschaltung eines Kommutatorwiderstands (150), einer Kommutatorspule (160) und der Kondensatorschaltung umfasst.

4.  Verfahren zum Betreiben eines Gleichspannungs-Leistungsschalters (100) gemäß einem der vorangehenden Ansprüche mit folgenden Schritten:

    - Ermitteln einer Öffnungsbedingung für den Gleichspannungs-Leistungsschalters (100), wobei die Öffnungsbedingung wenigstens eine der folgenden Öffnungsbedingung umfasst:

        -- Anforderung zum Trennen von kapazitiven Lasten und Schalten von Leitungen oder Kabeln;
        -- Anforderung zum Öffnen unter Stromfluss;
        -- Anstieg des Stroms als Indikator eines Kurzschlusses;
        -- Überschreiten der Stromanstiegsrate über einen Grenzwert;
        -- Öffnen der Unterbrechereinheit;
        -- Ermitteln wenigstens eines für die Öffnungsbedingung geeigneten Kondensatorzweigs;
        -- Schließen des oder der Kondensatorzweig-Schalter (190...195) der ermittelten Kondensatorzweige.

**Claims**

1.  DC voltage circuit breaker (100) having

    - at least one interrupter (120) and
    - a commutator device situated in parallel with the interrupter,

    wherein

    - the commutator device comprises a capacitor circuit,
    - the capacitor circuit comprises a parallel connection of three to six capacitor branches, and
    - the capacitor branches each have a capacitor (170...175) in series with an inductor and a capacitor branch switch (190...195),

    wherein the capacitors (170...175) of the capacitor branches have capacitances that are different from each other,
    wherein

    - one or multiple capacitors (170...175) are designed in such a way that the producible reverse current is sufficient for switching nominal currents by closing the respective capacitor branch switch(es) (190...195),

- one or multiple capacitors (170...175) are designed in such a way that the producible reverse current is sufficient for switching short-circuit currents by closing the respective capacitor branch switch(es) (190...195), and

- one or multiple capacitors (170...175) are designed in such a way that the producible reverse current is configured by closing the respective capacitor branch switch(es) (190...195) for disconnecting the line when currents are very small.

**2.** DC voltage circuit breaker (100) according to Claim 1, having an energy absorber (180) in a parallel connection to the commutator device.

**3.** DC voltage circuit breaker (100) according to one of the preceding claims, in which the commutator device comprises a series connection of a commutator resistor (150), a commutator coil (160), and the capacitor circuit.

**4.** Method for operating a direct-current circuit breaker (100) according to one of the preceding claims, having the following steps:

- ascertaining an opening condition for the DC voltage circuit breaker (100), wherein the opening condition comprises at least one of the following opening conditions:

-- request for disconnecting capacitive loads and switching lines or cables;
-- request for opening under current flow;
-- increase of the current as an indicator of a short circuit;
-- exceeding the current increase rate over a limit value;
-- opening the interrupter unit;
-- ascertaining at least one capacitor branch that is suitable for the opening condition;
-- closing the capacitor branch switch(es) (190...195) of the ascertained capacitor branches.

**Revendications**

**1.** Disjoncteur (100) à tension continue comprenant

- au moins un interrupteur (120) et
- un dispositif de commutateur monté en parallèle à l'interrupteur,

dans lequel

- le dispositif de commutateur comprend un circuit de condensateur,
- le circuit de condensateur comprend un circuit en parallèle de trois à six branches de condensateur et
- les branches de condensateur ont chacune un condensateur (170...175) en série avec une inductance et un interrupteur (190...195) de branche de condensateur,

dans lequel les condensateurs (170...175) des branches de condensateur ont des capacités différentes les unes des autres,
dans lequel

- un ou plusieurs condensateurs (170...175) sont conçus de manière à ce que le contre-courant pouvant être produit par la fermeture du ou des interrupteurs (190...195) de branche de condensateur suffisent à la connexion de courants nominaux,
- un ou plusieurs condensateurs (170...175) sont conçus de manière à ce que le contre-courant pouvant être produit pour la fermeture du ou des interrupteurs (190...195) de branches de condensateur suffisent à la connexion de courants de court-circuit et
- un ou plusieurs condensateurs (170...175) sont conçus de manière à ce que le contre-courant pouvant être produit pour la fermeture du ou des interrupteurs (190...195) de condensateur soit conçu pour séparer la ligne à des courants très petits.

**2.** Disjoncteur (100) à tension continue suivant la revendication 1, comprenant un absorbeur (180) d'énergie en un circuit en parallèle au dispositif de commutateur.

**3.** Disjoncteur (100) à tension continue suivant l'une des revendications précédentes, dans lequel le dispositif de commutateur comprend un circuit-série d'une résistance (150) de commutateur, d'une bobine (160) de commutateur et du circuit de condensateur.

**4.** Procédé pour faire fonctionner un disjoncteur (100) à tension continue suivant l'une des revendications précédentes, comprenant les stades suivants :

- détermination d'une condition d'ouverture du disjoncteur (100) à tension continue, la condition d'ouverture comprenant au moins l'une des conditions d'ouverture suivantes :

-- demande de séparation de charge capacitive et de connexion de ligne de câble ;
-- demande d'ouverture sous flux de courant ;

-- augmentation du courant comme indicateur d'un court-circuit ;

-- dépassement du taux d'augmentation du courant au-delà d'une valeur limite ;

-- ouverture de l'unité d'interrupteur ;

-- détermination d'au moins une branche de condensateur appropriée à la condition d'ouverture ;

-- fermeture du ou des interrupteurs (190...195) des branches de condensateur déterminées.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- JP 2005222705 A
- JP 8148066 A